# EUROPEAN PATENT APPLICATION

(11) **EP 1 324 610 A2**
(43) Date of publication of application: **02.07.2003**
(21) Application number: 02020882.3
(22) Date of filing: 18.09.2002
(51) Int. Cl.: H04N 7/24

(54) **Method for replaying a broadcast program in a digital broadcast receiver**

(30) Priority: 22.12.2001 KR 2001083252
(71) Applicant: Humax Co., Ltd., Yougin City, Kyonggi-Do (KR)
(72) Inventor: Kim, Jong Soon, Seoul 156-090 (KR)
(74) Representative: Körner, Ekkehard, Dipl.-Ing.

(57) **Abstract**

A method that provides various replay functions with a recorded digital broadcast program in a digital broadcast receiver. A program transmitting system creates replay information regarding intervals in a program that are likely to be replayed by users and transmits the replay information along with the program to a digital broadcast receiver. A digital broadcast receiver receiving a digital broadcast program extracts and stores replay information carried in the digital broadcast program, simultaneously decoding, outputting, and storing the received broadcast program, responsive to a replay request by a user locates an interval specified by the replay information, and decodes and outputs the located interval according to the play mode specified by the replay information.

## Description

### BACKGROUND OF THE INVENTION

### Field of the Invention

The present invention relates to a method for enabling various replay operations with a recorded broadcast program in a digital broadcast receiver that is capable of not only presenting a received program via a display device but also storing a received program on a storage medium such as a hard disk drive.

### Description of the Related Art

With remarkable advancements in digital signal processing, Moving Picture Experts Group (MPEG) audio/video coding standard has emerged as a major technique for the transport of digital audio/video data such as movies. Along with the MPEG standard, the development of digital communication techniques have enabled digital broadcasts. The transitions from analog to digital broadcasts are presently underway based upon the MPEG standard in terrestrial, satellite, and cable broadcasts industries.

Digital broadcasts offer many advantages over its analog counterparts, which include superior audio/video quality for a given bandwidth, smaller bandwidth for a given image resolution, compatibility with computers and storage media, simultaneous broadcasts of multiple programs in a single channel, etc.

In digital broadcasts, a multitude of programs compressed according to the MPEG standard are multiplexed into a single transport stream comprising a series of transport packets and transmitted in the form of a transport stream. A single transport stream transmitted through an RF channel, therefore, may carry a multitude of programs or sub-channels. The transmitted transport stream is received and demultiplexed by a broadcast receiver at a user's location.

A received transport stream contains Program Specific Information (PSI), information regarding programs carried in the transport stream. If a user selects a program or sub-channel, the broadcast receiver detects the ID of the transport packets associated with the selected program by referring to the PSI contained in the received transport stream and decodes the transport packets having the detected ID, thereby retrieving audio/video data of the selected program.

Digital set-top box manufacturers recently started releasing more sophisticated set-top boxes with recording capability. Such a set-top box contains a hard disk drive with a high storage capacity within it and is capable of recording a selected broadcast program on the hard disk drive, simultaneously playing the selected program. The recorded program can be played at anytime by a user command. A set-top box with such a function is called a personal video recorder (PVR)

A broadcast receiver with a functionality of a personal video recorder offers flexible trick play functions such as fast forward, rewind, or pause as well as simple playback of a recorded program. To perform such trick play modes, however, a user usually needs to issue a combination of several commands via an input device such as a remote control.

For example, to replay a movie from a scene that was already played, the user needs to press a rewind button to first locate the desired scene and again press a play button immediately when the desired scene is reached. If the user fails to press the play button and the desired scene is passed, the user should press a fast forward button to locate the desired scene again and press the play button at the desired scene. Such an operation, however, is a troublesome and time-consuming task and is not user-friendly to some extent.

### SUMMARY OF THE INVENTION

It is therefore an object of the present invention to provide a method that enables a user of a set-top box with a functionality of a personal video recorder to perform replay operations easily, wherein predefined replay information for intervals in a program which are likely to be replayed by the user is transmitted together with the program and the set-top box responsive to a user command performs a replay operation according to the predefined replay information.

A method for providing replay information for a broadcast program in accordance with the present invention comprises the steps of creating replay information specifying at least one interval to be replayed in a broadcast program and a play mode for each of the intervals, and transmitting the replay information together with the program to a broadcast receiver.

A method for replaying a digital broadcast program in a digital broadcast receiver in accordance with one aspect of the present invention comprises the steps of decoding, outputting, and storing a received broadcast program, simultaneously extracting and storing replay information carried in the program and, responsive to a replay request by a user, searching for an interval in the program pointed by one piece of the stored replay information and decoding and outputting the interval according to a play mode specified by said one piece of replay information.

A method for replaying a digital broadcast program in a digital broadcast receiver in accordance with another aspect of the present invention comprises the steps of decoding, outputting, and storing a received broadcast program, simultaneously extracting and sequentially storing at least one piece of replay information carried in the broadcast program and, responsive to a replay request by a user, selecting at least one piece of the stored replay information sequentially in order of their reception time and decoding and outputting respective intervals pointed by the selected piece or pieces of replay information according to a play mode specified by each selected piece of replay information.

### BRIEF DESCRIPTION OF THE DRAWINGS

The accompanying drawings, which are included to provide a further understanding of the invention, illustrate the preferred embodiments of the invention, and together with the description, serve to explain the principles of the present invention.

In the drawings:
FIG. 1 is a schematic block diagram illustrating necessary components for transmitting and receiving digital broadcasting;
FIG. 2 is a schematic diagram of replay information entries and the way the replay information entries are transported in accordance with an embodiment of the present invention;
FIG. 3 is a schematic diagram illustrating the Program Specific Information (PSI) structured as a set of tables;
FIG. 4 is a block diagram of a digital broadcast receiver embodying the present invention; and
FIG. 5 is a schematic diagram showing an exemplary replay information file and a recorded broadcast program for which the replay information file is created in accordance with the present invention.

### DETAILED DESCRIPTION OF THE PREFFERRED EMBODIMENT

In order that the invention may be fully understood, preferred embodiments thereof will now be described with reference to the accompanying drawings.

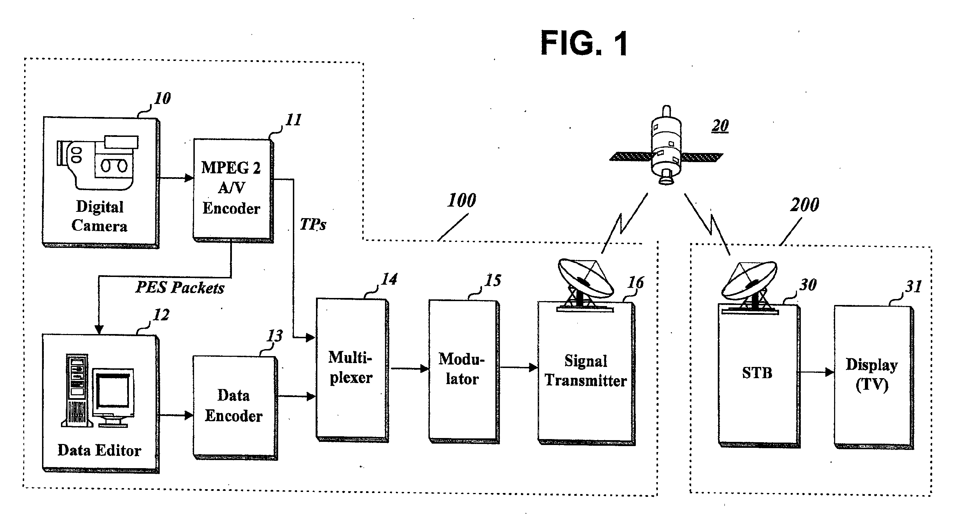

FIG. 1 illustrates necessary components for transmitting and receiving digital broadcasting, the components including a broadcast transmission system 100, a communication satellite 20, and a broadcast receiving system 200. The broadcast transmission system 100 consists of a digital camera 10, an MPEG A/V encoder 11, a data editor 12, a data encoder 13, a multiplexer 14, a modulator 15, and a signal transmitter 16. The broadcast receiving system 200 consists of a digital broadcast receiver 30 for receiving and decoding digital broadcasting signals transmitted via the communication satellite 20 from the signal transmitter 16 and a TV 31 for presenting audio/video signals received from the digital broadcast receiver 30. The digital broadcast receiver 30 is a set-top box with a functionality of a personal video recorder.

The data editor 12, which may be incorporated with the data encoder 13, creates and edits replay information for an A/V data stream encoded by the MPEG A/V encoder 11 and additional contents. The A/V data stream comprises a series of transport packets each of which is fixed in length at 188 bytes as specified by the MPEG standard. The task of creating and editing data can be conducted by a human operator or automatically as programmed beforehand.

The replay information created and edited by the data editor 12 is special information needed for replaying some designated intervals in a program to be transmitted. The replay information includes intervals to be replayed, play mode such as normal play or slow motion for each of the intervals, play speed for each of the intervals, and repetition number of replaying each of the intervals, etc.

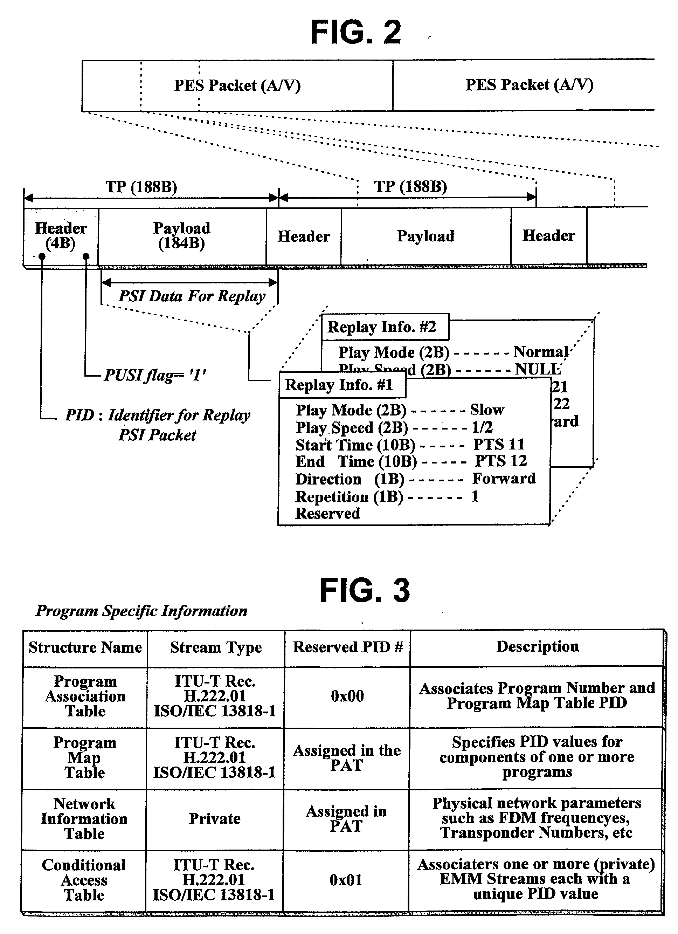

The replay information is encapsulated into a PSI transport packet as depicted in FIG. 2. The PSI transport packet encapsulating the replay information is assigned a unique packet identifier (PID) which is reserved exclusively for this purpose. Therefore, the PID of a replay PSI transport packet differs form the PIDs assigned to transport packets encapsulating A/V data outputted by the MPEG A/V encoder 11. Also, the PID differs from PIDs assigned to transport packets carrying other PSI such as a Program Association Table (PAT), a Program Map Table (PMT), a Network Information Table (NIT), and a Conditional Access Table (CAT).

The PID of the replay PSI transport packet may be defined in advance to be a value that is known to both of the broadcast transmission system 100 and the broadcast receiver 16. Or, the PID may be arbitrarily defined by the data editor 12 and carried to the broadcast receiver 16 with the defined PID contained in the PAT.

The replay information may be carried in a single PSI transport packet. In the event where the replay information is not accommodated by a PSI transport packet, the information is divided and carried in two or more transport packets and the Payload Unit Start Indicator (PSUI) of a transport packet containing the first byte of the replay information is set to '1'.

The replay information contained in the payload(s) of a PSI transport packet(s) may be structured in several ways. It can be formatted as a Packetized Elementary Stream (PES) packet defined by the MPEG. It can be structured according to the Digital Storage Media-Command and Control (DSM-CC) standard which is extended based on the MPEG standard and can be processed directly by the DSM-CC session lying on the PSI layer. Or a Replay Session as an example of the Private Session may be defined and the replay information is formatted such that it can be processed by the Replay Session.

As depicted in FIG. 2, the replay information consists of a plurality of fields including a 2-byte play mode field, a 2-byte play speed field, a 10-byte start time field and a 10-byte end time field for specifying the replay interval, a 1-byte play direction field, a 1-byte repetition number field for specifying the number of repetitions of the replay, etc.

The meaning of each field is self-evident. The play mode field is indicative of how to replay a desired interval and may be given as 'slow motion' or 'frame advance'. The play speed field dictates the play speed of the interval and may be given as '1/2x speed'. The play direction field indicates the play direction and is either forward or backward. The two time fields indicative of the replay interval store the presentation time stamp (PTS) values of the PES packets corresponding to the start time and end time of the replay interval. In case the repetition number field contains a negative number such as -1, the replay is repeated indefinitely until another request is received.

The play mode field may include 'highlight' mode which is intended to replay a recorded program in such a way that the program may be digested. The intervals for the 'highlight' mode may overlap with other replay intervals.

As mentioned above, the replay information is created by the data editor 12 either manually as directed by a human operator or automatically as programmed in advance.

Consider an example in which the replay information is created automatically as programmed in advance. If a human operator issues a request for creation of replay information while A/V transport packets are received from the MPEG A/V encoder 11, the data encoder 12 sets a replay interval with a predetermined time period, for example, 30 seconds. The end time of the replay interval is set to the time at which the request is received and the start time is set automatically according to the predetermined time period. The PTS values of PES packets corresponding to the start time and end time are stored in the start time and end time fields, respectively. The play mode field is set to 'slow motion'. The remaining fields may be initialized to default values set by the human operator. For example, the default values of the play speed, play direction, and repetition number fields may be set to '1/4' (7.5 frames/sec), 'forward', 'once', respectively.

The created replay information is transmitted to the data encoder 13, which converts the replay information into a transport packet(s) according to a predefined format and delivers the transport packet(s) to the multiplexer 14. The replay PSI transport packet(s) is multiplexed with A/V transport packets by the multiplexer 14. The multiplexed transport packets are modulated by the modulated 15 and then transmitted by the signal transmitter 16 to the broadcast receiving system 200.

Such replay information provides a convenient environment for set-top box users. For example, if a special event such as a goal in a football match takes place, the operator requests the data editor 12 to create replay information for the event. Then a user may easily replay a 30-second interval including the special event just by pressing a single key reserved for replay operations on a remote control.

A method for replaying a broadcast program by referring to replay information created in accordance with the invention will now be described in detail.

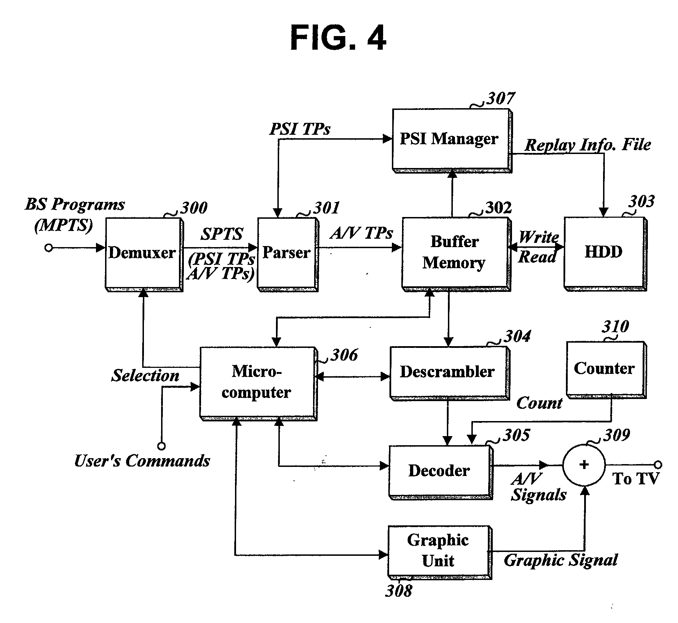

FIG. 4 shows a block diagram of a set-top box in accordance with an embodiment of the present invention, comprising a demultiplexer 300, a parser 301, a hard disk drive 303, a buffer memory 302, a descrambler 304, a decoder 305, a graphic unit 308, a graphic mixer 309, a PSI manager 307, a counter 310, and a microcomputer 306. The demultiplexer 300 demultiplexes a received multi-program transport stream (MPTS) to produce a single-program transport stream (SPTS) of a selected program which carries A/V data and PSI transport packets. The single-program transport stream is separated into A/V transport packets and PSI transport packets by the parser 301. The buffer memory 302 temporarily stores A/V transport packets before they are recorded on the hard disk drive 303. If the A/V transport packets stored in the buffer memory 302 contains scrambled data, the descrambler 304 removes scrambles on the A/V transport packets to yield unscrambled data. The decoder 305 decodes the unscrambled A/V transport packets and thereby retrieves video and audio data of the selected program. The graphic unit 308 creates graphic images such as icons. The graphic mixer 309 mixes outputs of the graphic unit 308 and the decoder 305 so that the pictures retrieved by the decoder 305 may be overlaid with graphics generated by the graphic unit 308. The PSI manager 307 analyzes PSI transport packets received from the parser 301 to extract replay information and stores the extracted replay information sequentially in a file on the hard disk drive 303. The counter 310 counts an internal system clock of a predefined frequency. The microcomputer 306 controls each component of the set-top box to perform requested replay operations.

Assumed to have a storage capacity of 40 GB, the hard disk drive 303 theoretically can hold 330 minutes length of MPEG transport streams received at a rate of 16 Mbps.

The replay information created by the PSI manager 307 is stored in a file in association with the A/V data transport packets on the hard disk drive 303. The replay information file remains open so that subsequent replay information can be added to the file.

Receiving a transport stream from the demultiplexer 300, the parser 301 outputs A/V transport packets and PSI transport packets carried in the received transport stream to the buffer memory 302 and the PSI manager 307, respectively, according to the PID of each of the transport packets. The PID that identifies PSI transport packets carrying the replay information can be detected by the PAT data that have been already received or the PID is a predefined value that is known to the set-top. The PIDs identifying other PSI transport packets are contained in the PAT data and the PSI manager 307 detects the PIDs by analyzing the PAT data carried in the transport packets having a PID 0.

Instead of outputting A/V transport packets, the parser 301 may output PES packets to the buffer memory 302 after decapsulating A/V transport packets.

When detecting a replay PSI transport packet from among input PSI transport packets, the PSI manager 307 examines the PUSI flag contained in the header of the transport packet. At the occurrence of a replay PSI transport packet having the PUSI set to '1', the PSI manager 307 begins to collect the data carried in the payloads of the transport packet and subsequent replay PSI transport packets until the occurrence of the next replay PSI transport packet having the PUSI set to '1' so as to complete a replay information entry.

The size of a replay information entry in the preferred embodiment is less than 184 bytes and therefore one replay PSI transport packet carries one replay information entry.

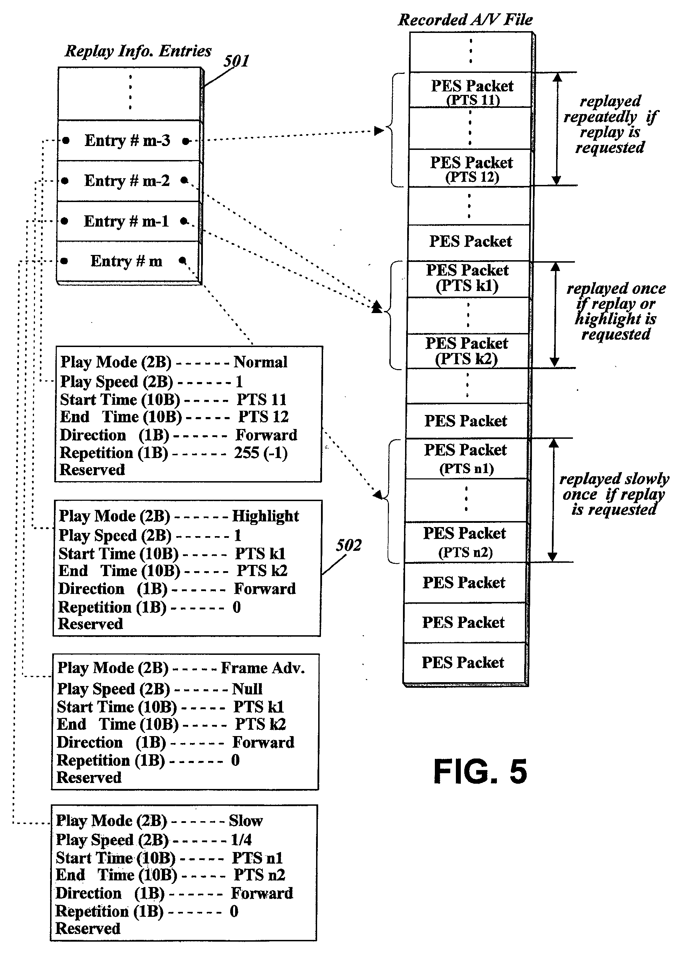

The replay information entries constructed in this manner are added to the replay information file 501 that remains open, as depicted in FIG. 5.

The process of extracting replay information entries and adding the extracted replay information entries to the replay information file continues while the decoder 305 performs decoding of received A/V data.

The microcomputer 306 provides the graphic unit 308 with graphic image data for an icon to notify users that a replay service is available at the moment and a coordinate at which the icon will be displayed. The graphic unit 308 then generates a video signal for displaying the received graphic image at the received coordinate. The video signal from the graphic unit 308 is mixed with the video signal from the decoder 305 by the graphic mixer 309 so that the decoded video pictures are overlaid with the icon image. The shape of the graphic icon depends on the associated replay operation. Due to the icon, users easily learn that a certain replay service such as 'slow motion' or 'highlight' is available.

If a user finds an 'interval replay' icon on the TV screen while watching a program and presses an enter key on the icon, the microcomputer 306 examines whether the coordinate of the pointer on the TV screen associated with the enter key lies within the boundary of the icon. If so, the microcomputer 306 executes the 'interval replay' function as described below.

If the user's request is the first request while the 'interval replay' icon is displayed, the microprocessor 306 locates the last entry in the open replay information file, the last entry being the most recently received replay information entry. In the example in FIG. 5, the most recently received replay information entry is Entry #m. The microcomputer 306 then executes a replay function as specified by the replay information entry.

In FIG. 5, the replay information Entry #m is related to the interval consisting of PES packets having PTS values between PTS n1 to PTS n2. The play mode, play speed, and repetition number fields pertaining to the replay interval are 'slow motion', '1/2', and '0', respectively. The microcomputer 306 loads the PES packets forming the replay interval stored on the hard disk drive 303 into the buffer memory 302 and outputs the video data carried in the packets to the decoder 305 via the descrambler 304, in which case the pumping rate is to be 15 frames per second as specified by the play speed field of the replay information Entry #m. After the interval is replayed once, the microcomputer 306 resumes decoding of the program which has been recorded during the replay from the recently recorded data, for the repetition number field is '0'.

If the user requests to change the play speed in the middle of the replay operation, the microcomputer 306 ignores the current play speed specified by the replay information and adjusts the pumping rate according to a changed speed. For instance, suppose that the play speed field of a replay information entry is set to 'normal. Even in this case, the associated interval is replayed in such a way that a frame is displayed and advanced each time a key input by a user is received if the user requests 'frame advance' play mode.

If interrupted by another replay request from the user during the requested replay session, the microcomputer 306 searches for the preceding replay information entry (Entry #(m-1)) and begins a new replay session according to the searched replay information entry.

Each time a new replay request is received during a replay session, such a scanning of the preceding replay information entry and replaying according to the searched replay information entry continues. In case the play mode of a searched replay information entry is 'highlight', the replay information is ignored and the corresponding replay interval is skipped. If a request of normal play is received during a replay session, the microcomputer 306, as explained above, resumes decoding of the program that has been recorded during the replay session from the most recently recorded data.

It has been assumed thus far that replay operations are performed with reference to data stored in a hard disk drive. In case of real-time data, it is also possible to perform replay operations using data stored temporarily in a memory buffer for a predetermined time period. Also, in case of receiving a program that has been recorded before, it is possible to implement replay operations using the recorded data so that any interval that will appear before or after the current scene can be freely replayed.

Each time a user requests a replay operation, the interval associated with the replay operation may be defined by the user and stored on the hard disk drive. The user-defined interval may be replayed later using the stored replay information

If a 'highlight' icon on the TV screen is selected, the microcomputer 306 scans the replay information file 501 for all the entries having the play mode of 'highlight' and processes searched entries sequentially in order of time. In other words, the microcomputer 306 replays the interval associated with the first replay information entry with a specified speed and the intervals associated with the subsequent replay information entries sequentially until the last information entry is processed.

Utilizing the play mode of 'highlight', the user can briefly watch some important scenes of a program that is recorded but not watched just by a simple manipulation, the scenes being designated by a broadcaster of the program.

As explained thus far, the method for replaying a program provides a user-friendly replay environment in which some intervals that are likely to be replayed by users are predefined by a broadcaster and a user can replay the intervals easily with a simple manipulation.

While the invention has been disclosed with respect to a limited number of embodiments, those skilled in the art, having the benefit of this disclosure, will appreciate numerous modifications and variations therefrom. It is intended that the appended claims cover all such modifications and variations as fall within the true spirit and scope of the invention.

## Claims

1. A method of enabling replay of a broadcast program, comprising the steps of:
(a) creating replay information specifying at least one interval in a broadcast program and a play mode for each of the intervals; and
(b) transmitting said replay information together with the broadcast program to a digital broadcast receiver.

2. The method set forth in claim 1, wherein said replay information is transmitted in the form of Program Specific Information (PSI) transport packets defined by the MPEG standard.

3. The method set forth in claim 2, wherein, in said step (b), a 1-bit Payload Unit Start Indicator flag in a header of a transport packet carrying a first byte of said replay information is set to '1'.

4. The method set forth in claim 1, wherein said replay information is transmitted in the form of PES (Packetized Elementary Stream) packets defined by the MPEG standard.

5. The method set forth in claim 1, wherein said replay information includes a replay speed and/or replay repetition number for each interval.

6. The method set forth in claim 1, wherein each interval determined in the broadcast program is specified by presentation time stamp (PTS) values of a first and a last MPEG-defined PES packet contained in each interval.

7. The method set forth in claim 1, wherein said play mode includes 'normal play', 'slow play', and 'frame-advance play'.

8. The method set forth in claim 1, wherein said replay information further includes information on a plurality of intervals selected so that the broadcast program may be viewed in digest.

9. The method set forth in claim 1, wherein said step (a), responsive to a request for creation of replay information while transmitting the broadcast program, creates replay information including a replay interval starting from a predetermined period ago and ending at the current position of the program and a play mode for the replay interval, the play mode being set to 'slow play'.

10. A method for replaying a digital broadcast program in a digital broadcast receiver, comprising the steps of:
(a) receiving a digital broadcast program;
(b) extracting and storing at least one piece of replay information carried in the digital broadcast program while decoding, outputting, and storing the received broadcast program simultaneously; and
(c) searching for a piece of replay information associated with an interval to replay in response to a user's replay request, and decoding and outputting the interval according to a play mode specified by the found piece of replay information.

11. The method set forth in claim 10, wherein said step (c) selects a piece of replay information from the stored plural pieces of replay information and decodes and outputs the interval pointed by the selected piece of replay information according to a play mode specified by the selected piece of replay information.

12. The method set forth in claim 11, wherein said step (c), responsive to a user's replay request, selects a piece of replay information, of which reception time is closest to a replay request time, from the stored plural pieces of replay information and decodes and outputs the interval pointed by the selected piece of replay information according to a play mode specified by the selected piece of replay information.

13. The method set forth in claim 11, wherein said step (c), responsive to another replay request from a user during replay of the interval, selects another piece of replay information that precedes the current piece of replay information, and decodes and outputs the interval pointed by the said another piece of replay information according to a play mode specified by said another piece of replay information.

14. The method set forth in claim 10, wherein the replay request from a user is issued by way of selecting an icon shown on a screen.

15. The method set forth in claim 10, wherein each piece of replay information includes a replay speed and/or replay repetition number for an associated interval.

16. The method set forth in claim 10, wherein said step (b) extracts each piece of replay information received in the form of Program Specific Information (PSI) transport packets defined by the MPEG standard from the broadcast program based on PID values of the transport packets.

17. A method for replaying a digital broadcast program in a digital broadcast receiver, comprising the steps of:
(a) receiving a digital broadcast program;
(b) extracting and sequentially storing at least one pieces of replay information carried in the digital broadcast program, while decoding, outputting, and storing the received broadcast program simultaneously; and
(c) selecting at least one piece of the stored replay information sequentially in order of reception time in response to a user's replay request, and decoding and outputting respective intervals pointed by the selected piece or pieces of replay information according to a play mode specified by each selected piece of replay information.

18. The method set forth in claim 17, wherein said step (c) decodes and outputs the respective intervals pointed by each piece of the stored replay information at normal play speed.
